# EUROPÄISCHE PATENTSCHRIFT

(11) **EP 3 642 573 B1**
(45) Veröffentlichungstag und Bekanntmachung des Hinweises auf die Patenterteilung: **19.04.2023**
(21) Anmeldenummer: 18733590.6
(22) Anmeldetag: 22.06.2018
(51) Int. Cl.: G01H 1/00, B64C 27/00, B64D 45/00

(54) **VERFAHREN ZUR ERKENNUNG VON SCHÄDEN EINES ROTORS EINES LUFTFAHRZEUGS**
METHOD OF DETECTION OF AIRCRAFT ROTOR DAMAGES FOR AIRCRAFT WITH MEANS FOR ACTIVE VIBRATION CONTROL
PROCEDE DE DETECTION DES DOMMAGES AU ROTOR D'UN AERONEF POUR AERONEFS AVEC DES MOYENS DE CONTRÔLE ACTIF DES VIBRATIONS

(30) Priorität: 22.06.2017 DE 102017210565
(43) Veröffentlichungstag der Anmeldung: 29.04.2020
(73) Patentinhaber: Airbus Helicopters Technik GmbH, 34379 Calden (DE)
(72) Erfinder: HARTMANN, Steffen, 34346 Hann. Münden (DE); HAAR, Jan, 34292 Ahnatal (DE); ARNOLD, Uwe, 34132 Kassel (DE)
(74) Vertreter: GPI Brevets
(86) Internationale Anmeldenummer: PCT/EP2018/066713
(87) Internationale Veröffentlichungsnummer: WO 2018/234523

(56) Entgegenhaltungen:
- WO-A1-2015/160945
- US-A- 5 383 133
- P M PAWAR ET AL: "Helicopter rotor health monitoring- a review", PROCEEDINGS OF THE INSTITUTION OF MECHANICAL ENGINEERS, PART G: JOURNAL OF AEROSPACE ENGINEERING, Bd. 221, Nr. 5, 1. Mai 2007 (2007-05-01), Seiten 631-647, XP055493186, United Kingdom ISSN: 0954-4100, DOI: 10.1243/09544100JAERO245
- David Pratt: "The Application of Advanced Anomaly Detection to Tail Rotor HUMS Data", , 1. März 2013 (2013-03-01), XP055493429, Gefunden im Internet: URL:https://publicapps.caa.co.uk/docs/33/P APER%20201201%20AAD%20HUMS%20DATA%20310113 .pdf [gefunden am 2018-07-18]

## Beschreibung

Die Erfindung betrifft ein Verfahren zur Erkennung von Schäden eines Haupt- und/oder Heckrotors eines Luftfahrzeugs, insbesondere eines Drehflüglers, wie beispielsweise eines Hubschraubers, wobei das Luftfahrzeug Aktuatoren zur aktiven Vibrationsreduktion von Haupt- und/oder Heckrotorvibrationen aufweist.

Es ist bekannt, dass sich die Amplitude und Phase von rotorharmonischen Vibrationen in der Zelle des Luftfahrzeugs in Abhängigkeit des Flugzustands verändern. Zudem ist bekannt, dass sich die Amplitude und Phase von rotorharmonischen Vibrationen in der Zelle des Luftfahrzeugs in Abhängigkeit der Konfiguration des Luftfahrzeugs, wie beispielsweise der Masse, Schwerpunktlage, usw. verändern. Es ist ebenfalls bekannt, dass Beschädigungen von Haupt- und/oder Heckrotor, welche eine Änderung der Rotorblattmasse oder eine Änderung der aerodynamischen Eigenschaften der Rotoren zur Folge haben, die Amplitude und Phase von rotorharmonischen Vibrationen in der Zelle des Luftfahrzeugs verändern. Heutige HUM-Systeme (Health and Usage Monitoring Systems) sind durch den Vergleich vorhergesagter und gemessener Vibrationen in der Lage, Beschädigungen an Haupt- und/oder Heckrotor zu erkennen. HUM-Systeme sind beispielsweise in der GB8915406 und in der US20140070153A1 beschrieben.

Um Schwingungen und/oder Vibrationen zu reduzieren kommen seit einiger Zeit sogenannte aktive Systeme zum Einsatz. Ein aktives oder ein aktiv geregeltes System kann beispielsweise eine verstellbare Steuerstange und/oder eine verstellbare Trimmklappe sein. Beide Systeme bewirken eine Veränderung existierender und/oder eine Erzeugung zusätzlicher Kräfte und/oder Momente am Rotor mit gleicher Amplitude, aber entgegengesetzter Phase, zu den ursprünglichen Kräften und/oder Momenten. Die Überlagerung kann zu einer destruktiven Interferenz führen, sodass insbesondere rotorinduzierte Vibrationen reduziert, idealerweise ausgelöscht werden können. Anders ausgedrückt werden die Rotorblätter derart angesteuert, dass die unerwünschten Vibrationskräfte möglichst gar nicht entstehen. Elektrisch längenverstellbare Steuerstangen sind u.a. aus der DE102009001393A1 und der DE102012206755A1 bekannt.

US5383133 offenbart ein integriertes Vibrationsminderungs-, Strukturüberwachungs- und Gebrauchsüberwachungssystem für einen Hubschrauber mit einer Anzahl von Schwingungssensoren, die an der Struktur eines Hubschraubers angebracht sind, mit einem Rechner und einer Anzahl von Betätigungsorganen, die im Einsatz Kräfte in die Struktur einleiten, um Schwingungen der Struktur zu reduzieren.

Weist ein Hubschrauber ein aktives System zur Reduktion der Schwingungen und/oder Vibrationen, insbesondere der Haupt- und/oder Heckrotorvibrationen auf, so ist das zuvor beschriebene Prinzip der Fehlererkennung nicht mehr anwendbar, da die aktiven Systeme in der Lage sind, die durch eine Beschädigung des Rotors verursachten Vibrationsänderungen zu maskieren.

Beim Einsatz von aktiv geregelten Systemen zur Vibrationsreduktion sind die Amplituden der rotorharmonischen Vibrationen - bei ausreichender Performance des jeweiligen Systems - in allen Flugzuständen niedrig. Des Weiteren verfügen die Vibrationen des unbeschädigten Luftfahrzeugs auf Grund ihrer geringen Amplitude in der Regel nicht mehr über eine charakteristische Phase, wie es bei Hubschraubern ohne aktiv geregelte Systeme zur Vibrationsreduktion der Fall ist.

Ein signifikanter Teil der rotorharmonischen Vibrationen, welche mit Hilfe der aktiv geregelten Systeme reduziert werden sollen, resultiert aus Fertigungstoleranzen verschiedener Bauteile, insbesondere von Teilen des dynamischen Systems des Hubschraubers und kann zusätzlich durch luftfahrzeugspezifische Ausstattungsvarianten und/oder Anbauten, wie z.B. Außenlastwinden beeinflusst werden. Somit besitzen alle Hubschrauber, auch die des gleichen Typs, grundsätzlich unterschiedliche Referenzmuster bzw. Flugsignaturen.

Das Referenzmuster ist aber auch für ein einzelnes Luftfahrzeug nicht absolut konstant, da es auch durch weitere Faktoren wie Beladungszustand und Umweltfaktoren, wie Außentemperatur, Luftfeuchte, Flughöhe, etc. beeinflusst wird. Weitere Beeinflussungen resultieren aus Abweichungen im Einsatzspektrum, wie z.B. Variationen der Fluggeschwindigkeit oder der Flugzustände gegenüber den vorherrschenden Bedingungen.

Es ist daher Aufgabe der Erfindung ein Verfahren für ein Luftfahrzeug mit Aktuatoren zur aktiven Vibrationsreduktion bereitzustellen, das beispielsweise durch Beschädigung am Haupt- und/oder Heckrotor des Luftfahrzeugs verursachte Vibrationen erkennt.

Gemäß dem erfindungsgemäßen Verfahren zur Erkennung von Schäden eines Rotors eines Luftfahrzeugs, insbesondere eines Hubschraubers werden zunächst Aktuatorstellgrößen in einem Referenzflugbetrieb des Luftfahrzeugs ermittelt, wobei die ermittelten Aktuatorstellgrößen im Referenzflugbetrieb des Luftfahrzeugs zur aktiven Vibrationsreduktion verwendet werden.

Somit weist das Luftfahrzeug Aktuatoren zur aktiven Vibrationsreduktion auf. Die Aktuatoren zur Vibrationsreduktion bilden aktive bzw. aktiv geregelte Systeme, die dazu vorgesehen sind, eine Beeinflussung der Vibrationen hinsichtlich Amplitude und Phase zu bewirken. Die aktiven Systeme können dabei aus einer Menge von mehreren Teilsystemen bestehen, deren Wirkung sich additiv überlagert.

Für die Ermittlung der Aktuatorstellgrößen können Sensoren verwendet werden, die beispielsweise die tatsächliche Einstellung oder Verstellung des jeweiligen Aktuators erfassen. Insbesondere bewirkt eine Verstellung der Aktuatoren gegenüber einem Ausgangszustand der Aktuatoren eine Vibrationsreduktion, wobei im Wesentlichen eine Phase und Amplitude der Vibrationen verändert werden. Mit anderen Worten sind unter Aktuatorstellgrößen Aktuatorverstellungen gegenüber Aktuatorausgangszuständen zu verstehen, wobei diese in mehreren Zeitpunkten im Referenzflugbetrieb ermittelt werden.

Beispielsweise wird eine verstellbare Trimmklappe als Aktuator zur aktiven Vibrationsreduktion verwendet. Alternativ oder ergänzend wird eine verstellbare Steuerstange als Aktuator zur aktiven Vibrationsreduktion verwendet. Eine Vibrationsreduktion kann dann beispielsweise durch Verstellen der Trimmklappe oder der Steuerstange vorgenommen werden. Insbesondere können mehrere Trimmklappen und/oder Steuerstangen zur Vibrationsreduktion vorgesehen sein.

Beispielsweise wird ein Winkelausschlag einer Trimmklappe oder die eine Längenverstellung einer Steuerstange als Aktuatorstellgröße erfasst. Es ist aber auch denkbar, dass diesbezüglich auf Daten eines Steuerrechners zurückgegriffen wird. Der Vorteil der Sensoren liegt darin, dass vom Steuerrechner unabhängige Daten zur Verfügung gestellt werden können.

Unter dem Begriff "Aktuatorstellgrößen" sind die jeweiligen Einstellungen bzw. Stellgrößen des jeweiligen Aktuators zu verstehen. Der Referenzflugbetrieb des Luftfahrzeugs dient zur Ermittlung des Referenzmuster bzw. der Referenzflugsignatur, die als Referenzgröße eines jeweiligen unbeschädigten Luftfahrzeugs dient.

Vorzugsweise wird die Referenzflugsignatur aus einer Mindestanzahl von Referenzflugbetrieben des jeweiligen Luftfahrzeugs erstellt, um den Einfluss von Umweltfaktoren und anderen Beeinflussungen wie beispielsweise Abweichungen im Einsatzspektrum vernachlässigbar gering zu halten. Mithin erfolgt das Ermitteln der Aktuatorstellgrößen insbesondere im Rahmen mehrerer Testflüge. Vorzugsweise liegen nach Durchführung mehrerer Testflüge ausreichend viele Aktuatorstellgrößen vor.

Bevorzugt bilden die im Referenzflugbetrieb des Luftfahrzeugs ermittelten Aktuatorstellgrößen erste Messwerte, die zu ersten Vektoren umgewandelt werden, wobei die ersten Vektoren die resultierende Richtung und Amplitude der vibrationsreduzierenden Wirkung der Aktuatoren darstellen. Mit anderen Worten werden Verstellvektoren, die als Referenz-Summenstellgrößen vorgesehen sind in mehreren Zeitpunkten im Referenzflugbetrieb aus der Summe der erfassten Aktuatorstellgrößen der zur aktiven Vibrationsreduktion vorhandenen Aktuatoren ermittelt.

In einem weiteren erfindungsgemäßen Schritt werden die im Referenzflugbetrieb des Luftfahrzeugs ermittelten Aktuatorstellgrößen in ersten Koordinaten eines Koordinatensystems dargestellt, wobei das Koordinatensystem eine Vielzahl von Datenbereichskacheln aufweist, wobei ferner die Koordinaten jeweiligen Datenbereichskacheln zugeordnet werden, wobei innerhalb einer Datenbereichskachel eine Vielzahl von Koordinaten darstellbar ist.

Insbesondere stellt die Menge aller Datenbereichskacheln bzw. ersten Datenbereiche einen Raum dar, in welchem die ersten Vektoren dargestellt werden können. Die Menge aller ersten Datenbereiche muss also ausreichend groß definiert werden, sodass ein jeder erster Vektor in einem entsprechenden ersten Datenbereich dargestellt werden kann, wobei maßgeblich die Amplitude der ersten Vektoren ist.

Unter einem Koordinatensystem ist ein System zur eindeutigen Bezeichnung der Positionen von Datenpunkten in einem Datenraum, insbesondere geometrischen Raum, vorliegend der jeweiligen Aktuatorstellgrößen bzw. Einstellungen des jeweiligen Aktuators, die zur aktiven Vibrationsreduktion verwendet werden, zu verstehen. Mit anderen Worten wird die Verstellung des jeweiligen Aktuators aus der Ausgangslage in eine Schwingungsdämpfungslage erfasst und im Koordinatensystem zunächst abgespeichert. Die Koordinaten der Aktuatorstellgrößen geben somit die genaue Einstellung des jeweiligen Aktuators an. Vorliegend ist unter einem Datenraum eine Struktur oder Auflistung von Datenpunkten zu verstehen, beispielsweise in Form einer Tabelle.

Unter Datenbereichskacheln sind geschlossene und nicht überlappende Datenbereiche des Koordinatensystems zu verstehen. Die Datenbereichskacheln werden durch Vorgabe einer Vielzahl von empirisch oder theoretisch ermittelter Amplituden- und Phasengrenzwerte gebildet. Die Datenbereichskacheln stellen somit Intervallbereiche dar, die eine Vielzahl von Koordinaten umfassen können. Beispielsweise werden in einer Datenbereichskachel alle Koordinaten von einem Datenpunkt (010) bis zu einem Datenpunkt (1|1) erfasst.

In einem weiteren erfindungsgemäßen Schritt wird die Anzahl der Aktuatorstellgrö-ßen im Referenzflugbetrieb des Luftfahrzeugs erfasst, die in jeder Datenbereichskachel angeordnet sind. Mithin erfolgt eine Zählung der Anzahl von Aktuatorstellgrößen in jeder Datenbereichskachel.

Insbesondere werden die ersten Datenbereiche anhand der jeweiligen Anzahl von ersten Vektoren bewertet. Es können Datenbereiche mit einer hohen oder niedrigen Anzahl von ersten Vektoren entstehen. Es kann aber auch vorkommen, dass erste Datenbereiche keine ersten Vektoren aufweisen. Die Bewertung kann beispielsweise in Form von Punkten vorgenommen werden, auch Scoring genannt.

Ist ein Scoring beispielsweise hoch, d.h. befinden sich viele erste Vektoren in einem ersten Datenbereich, so bedeutet dies, dass in einem bestimmten Flugzustand bestimmte Einstellungen der Aktuatoren wiederholt vorgenommen wurden, um die Vibrationen des Rotors zu reduzieren, sodass bestimmte Einstellungen der Aktuatoren als charakteristisch angesehen werden können.

In einem weiteren erfindungsgemäßen Schritt werden Datenbereichskacheln eliminiert, deren Anzahl an Aktuatorstellgrößen im Referenzflugbetrieb des Luftfahrzeugs unterhalb eines dafür vorgesehenen Grenzwertes ist, wodurch eine Referenzsignatur erstellt wird. Somit bilden die verbleibenden Datenbereichskacheln, die ausreichend viele Aktuatorstellgrößen aufweisen, die Referenzflugsignatur.

Insbesondere besteht die Referenzflugsignatur bzw. das Referenzmuster, aus der Menge der ersten Datenbereiche mit ersten Vektoren, deren Bewertung oberhalb des Grenzwertes bzw. Schwellwertes liegt, um dadurch Messfehler und sporadische Abweichungen aus dem Referenzmuster zu minimieren. Anders ausgedrückt: Bleiben gewisse erste Datenbereiche unterhalb eines bestimmten Scorings, dann bleiben diese Datenbereiche bei der Erzeugung des ersten Musters unberücksichtigt.

Für die weitere Verarbeitung der Datenbereiche kann vorgesehen sein, dass lediglich zwischen ersten Datenbereichen mit Bewertungen und ersten Datenbereichen ohne Bewertungen unterschieden wird und es nicht mehr auf die Höhe beispielsweise des Scorings ankommt. Jedoch ist es auch denkbar, auf die tatsächliche Bewertung zurückzugreifen.

In einem weiteren erfindungsgemäßen Schritt werden Aktuatorstellgrößen für eine flugspezifische Signatur ermittelt, wobei die ermittelten Aktuatorstellgrößen im Flugbetrieb des Luftfahrzeugs zur Vibrationsreduktion verwendet werden. Mithin befindet sich das Luftfahrzeug nun nicht mehr im Referenzflugbetrieb bzw. Testflug zum Sammeln von Referenzflugdaten, sondern in einem dem Referenzflugbetrieb zeitlich nachgelagerten Flugbetrieb, der beispielsweise einen normalen Flugbetrieb bzw. einen Einsatz darstellt. Die nun erfassten Aktuatorstellgrößen sind spezifisch für den jeweiligen Flugbetrieb und werden insbesondere durch Rotorschäden, beispielsweise durch Risse oder einem Risswachstum vorhandener Risse beeinflusst.

Insbesondere bilden die Aktuatorstellgrößen für die flugspezifische Signatur zweite Messwerte, die - wie schon weiter oben hinsichtlich der ersten Vektoren beschrieben - zu zweiten Vektoren umgewandelt werden. Mit anderen Worten werden Verstellvektoren, die als Referenz-Summenstellgrößen vorgesehen sind in mehreren Zeitpunkten im Flugbetrieb aus der Summe der erfassten Aktuatorstellgrößen der zur aktiven Vibrationsreduktion vorhandenen Aktuatoren ermittelt.

In einem weiteren erfindungsgemäßen Schritt werden die ermittelten Aktuatorstellgrößen im Flugbetrieb des Luftfahrzeugs in zweiten Koordinaten eines Koordinatensystems dargestellt, wobei das Koordinatensystem eine Vielzahl von Datenbereichskacheln aufweist, wobei ferner die Koordinaten jeweiligen Datenbereichskacheln zugeordnet werden, wobei innerhalb einer Datenbereichskachel eine Vielzahl von Koordinaten darstellbar ist, und wobei die Datenbereichskacheln der flugspezifischen Signatur identisch zu den Datenbereichskacheln der Referenzflugsignatur ausgebildet sind.

Mithin werden die nun ermittelten Aktuatorstellgrößen im Flugbetrieb des Luftfahrzeugs, nämlich die zweiten Koordinaten, ebenso wie die bereits im Referenzflugbetrieb des Luftfahrzeugs ermittelten Aktuatorstellgrößen, nämlich die erstenn Koordinaten, in ein identisches Koordinatensystem mit identischen Datenbereichskacheln dargestellt. Dadurch wird ein späterer Vergleich der jeweiligen Aktuatorstellgrößen ermöglicht.

Insbesondere bilden die Datenbereichskacheln für die flugspezifische Signatur zweiten Datenbereiche, in denen die zweiten Vektoren angeordnet sind.

In einem weiteren erfindungsgemäßen Schritt wird die Anzahl der Aktuatorstellgrö-ßen im Flugbetrieb des Luftfahrzeugs erfasst, die in jeder Datenbereichskachel angeordnet sind. Insbesondere werden diejenigen zweiten Datenbereiche erfasst, die zweite Vektoren aufweisen. Dies erfolgt identisch zu der - wie schon weiter oben beschriebenen - Vorgehensweise im Referenzflugbetrieb.

In einem weiteren erfindungsgemäßen Schritt werden Datenbereichskacheln eliminiert, deren Anzahl an Aktuatorstellgrößen im Flugbetrieb des Luftfahrzeugs unterhalb eines dafür vorgesehenen Grenzwertes ist, wodurch eine flugspezifische Signatur erstellt wird. Auch an dieser Stelle wir auf die identische Vorgehensweise, die schon weiter oben für den Referenzflugbetrieb beschriebenen wurde, verwiesen. Der einzige Unterschied dazu ist, dass in den Datenbereichskacheln Aktuatorstellgrößen vorliegen, die im Flugbetrieb des Luftfahrzeugs und nicht im Referenzflugbetrieb des Luftfahrzeugs ermittelt wurden. Deswegen bilden die nun verbleibenden Datenbereichskacheln die flugspezifische Signatur, die für den vorliegend durchgeführten Flugbetrieb kennzeichnend sind.

In einem weiteren erfindungsgemäßen Schritt werden die jeweiligen Datenbereichskacheln von der flugspezifischen Signatur und der Referenzsignatur miteinander verglichen, wobei bei einer Überschreitung eines Grenzwertes für die Anzahl an abweichenden Datenbereichskacheln zwischen der flugspezifischen Signatur und der Referenzsignatur ein Warnsignal für eine Schadenserkennung ausgegeben wird.

Der Vergleich der flugspezifischen Signatur und der Referenzsignatur kann durch eine Differenz der jeweiligen Datenbereichskacheln gebildet werden. Dadurch werden übereinstimmende Datenbereichskacheln entfernt, sodass nur ungleiche bzw. abweichende Datenbereichskacheln verbleiben.

Überschreitet die Anzahl abweichender Datenbereichskacheln einen dafür vorgesehenen Grenzwert bzw. Schwellwert, wird auf einen Schaden am Rotor geschlossen und ein Warnsignal ausgegeben. Das Warnsignal kann visuell und/oder akustisch sein. Ferner ist es denkbar, dass das Warnsignal ergänzend oder alternativ in Form eines Listenvermerks ausgegeben wird, wobei der Listenvermerk mittels eines Diagnosesystems abgerufen werden kann.

Vorzugsweise wird eine Differenz zwischen der flugspezifischen Signatur und der Referenzflugsignatur gebildet, um eine Differenzsignatur zu erhalten, wobei die Differenzsignatur mit einer Vielzahl von auf einer Datenbank abgelegten Schadenssignaturen verglichen wird, um einen spezifischen Schadensfall zu identifizieren. Die auf der Datenbank abgelegten Schadenssignaturen sind charakteristisch für bestimmte Schäden. Bevorzugt werden die auf der Datenbank abgelegten Schadenssignaturen in realen Versuchen und/oder computergestützten Simulationen ermittelt. Insbesondere werden mathematische Modelle verwendet, um auf die Schädigung des Rotors zu schließen.

Es hat sich herausgestellt, dass auftretende Schäden bei Luftfahrzeugen, insbesondere bei Hubschraubern mit technischen Einrichtungen bzw. Aktuatoren zur Vibrationsreduktion durch das erfindungsmäße Verfahren missionsprofilunabhängig erkannt werden können.

Vorzugsweise werden die jeweiligen Aktuatorstellgrößen in Polarkoordinaten eines Polarkoordinatensystems dargestellt. Mithin werden sowohl die Aktuatorstellgrößen, die im Referenzflugbetrieb erfasst werden, ebenso wie die Aktuatorstellgrößen, die im nachgelagerten Flugbetrieb erfasst werden, in Polarkoordinaten eines Polarkoordinatensystems dargestellt.

Vorliegend ist unter einem Polarkoordinatensystem ein zweidimensionales Koordinatensystem zu verstehen, in dem jeder Punkt in einem zweidimensionalen Raum durch den Abstand von einem vorgegebenen festen Punkt, nämlich dem Pol und den Winkel zu einer festen Richtung festgelegt wird. Der vom Pol in der festgelegten Richtung ausgehende Strahl wird Polarachse genannt. Ferner ist unter einem Abstand vom Pol eine Radialkoordinate zu verstehen, wobei ein Winkel zur Polarachse eine Winkelkoordinate darstellt.

Bevorzugt werden vor dem Darstellen der Referenzflugsignatur zusätzliche Datenbereichskacheln für alle Winkelkoordinaten von einem Pol des Polarkoordinatensystems bis zu einer Grenzwertradialkoordinate ergänzt. Dadurch werden pauschal resultierende Einstellungen der Aktuatoren mit geringer Amplitude berücksichtigt, die in der Regel eher eine geringe Wirkung hinsichtlich der zu minimierenden Vibrationen aufweisen und eher mit Regelfehlern behaftet sind als Einstellungen der Aktuatoren mit größerer Amplitude.

Vorzugsweise wird zumindest der Vergleich der flugspezifischen Signatur mit der Referenzflugsignatur während eines Flugbetriebes des Luftfahrzeugs durchgeführt. Ferner bevorzugt wird zumindest der Vergleich der flugspezifischen Signatur mit der Referenzflugsignatur nach einem Flugbetrieb des Luftfahrzeugs durchgeführt.

Mithin erfolgt zumindest der Vergleich der flugspezifischen Signatur mit der Referenzflugsignatur im Rahmen einer "post-flight"- Auswertung, d.h. offline bzw. nach dem Flugbetrieb, oder "in-flight"-Auswertung, d.h. online bzw. während des Flugbetriebs. Bei der "post-flight"-Auswertung kann beispielsweise mittels eines Anzeigeelements eine Warnmeldung ausgegeben werden, wenn beispielsweise die Differenzsignatur den dafür vorgesehenen Grenzwert überschritten hat. Diese Warnmeldung signalisiert dem Betreiber, dass beispielsweise ein Schaden am Haupt- und/oder Heckrotor vorliegt und eine Überprüfung angeraten ist. Bei der "in-flight"-Auswertung überprüft ein Auswertealgorithmus kontinuierlich die Differenzmenge der Referenzflugsignatur und der flugspezifischen Signatur, also der aktuell vorgenommenen Einstellungen der Aktuatoren zur Vibrationsreduktion. Bei Überschreiten eines dafür vorgesehenen Grenzwertes kann dem Piloten die Überschreiten des Grenzwertes direkt angezeigt werden. Dies ermöglicht dem Piloten bereits während des Flugbetriebes beispielsweise von anspruchsvollen Flugmanövern abzusehen.

Die Erfindung schließt die technische Lehre ein, dass zunächst eine Mindestanzahl von Aktuatorstellgrößen im Flugbetrieb des Luftfahrzeugs erreicht wird, bevor der Vergleich der flugspezifischen Signatur mit der Referenzflugsignatur erfolgt. Mit anderen Worten muss die Dauer des Flugbetriebs des Luftfahrzeugs ausreichend groß sein, damit eine belastbare Aussage bezüglich der flugspezifischen Signatur und somit ein aussagekräftiger Vergleich zwischen der flugspezifischen Signatur und der Referenzflugsignatur erfolgt. Bei einem zu kurzen Flugbetrieb des Luftfahrzeugs ist das Gewicht äußerer Faktoren in der Regel zu groß, sodass Fahlinterpretationen vorgenommen werden könnten, die es zu verhindern gilt.

Gemäß einer bevorzugten Ausführungsform der Erfindung wird bei Überschreitung eines Grenzwertes eines Gradienten für die Anzahl an abweichenden Datenbereichskacheln zwischen der flugspezifischen Signatur und der Referenzflugsignatur ein Warnsignal ausgegeben. Mit anderen Worten wird eine Veränderung der Anzahl an abweichenden Datenbereichskacheln zwischen der flugspezifischen Signatur und der Referenzflugsignatur überwacht, wobei eine zu schnelle Veränderung, die mit einem Betrag des Gradienten einhergeht, der den dafür vorgesehenen Grenzwert übersteigt, ein Warnsignal auslöst.

Ferner betrifft die Erfindung ein Computerprogrammprodukt, enthaltend maschinenlesbare Anweisungen, die, wenn sie auf einem Computer ausgeführt werden, den Computer zu einer Berechnungslogik aufwerten und dazu veranlassen, das erfindungsgemäße Verfahren auszuführen.

Das oben beschriebene Verfahren ist auch für Hubschrauber anwendbar, die keine Mittel zur Vibrationsreduktion aufweisen. Im Unterschied zum oben beschriebenen Verfahren werden anstelle der Ermittlung von jeweiligen Aktuatorstellgrößen bzw. Vektoren Vibrationsdaten mittels geeigneter Sensoren erfasst. Durch diesen Aspekt der Erfindung können auftretende Schäden bei Luftfahrzeugen, insbesondere bei Hubschraubern ohne technische Einrichtungen zur Vibrationsreduktion missionsprofilunabhängig erkannt werden.

Die vorliegende Erfindung wird anhand der nachfolgenden Figuren näher erläutert. Es zeigen:
- Fig. 1: ein beispielhaftes Profil der 1/rev Hauptrotorvibrationen eines unbeschädigten Luftfahrzeugs ohne aktive Vibrationsreduktion über verschiedene Flugzustände;
- Fig. 2: ein beispielhaftes Profil der 1/rev Hauptrotorvibrationen eines beschädigten Hauptrotors gem. Fig. 1;
- Fig. 3: ein beispielhaftes Profil der 1/rev Hauptrotorvibrationen eines unbeschädigten Luftfahrzeugs mit aktiver Vibrationsreduktion über verschiedene Flugzustände;
- Fig. 4: eine beispielhafte Darstellung von in einem Referenzflugbetrieb des Luftfahrzeugs ermittelten Aktuatorstellgrößen, die in einem Polarkoordinatensystem aufgetragen sind;
- Fig. 5: eine Bewertung von Datenbereichskacheln des Polarkoordinatensystems gemäß Fig. 4 in Abhängigkeit der jeweiligen Anzahl von im Referenzflugbetrieb des Luftfahrzeugs ermittelten Aktuatorstellgrößen;
- Fig. 6: eine Hervorhebung der Datenbereichskacheln gemäß Fig. 5, deren Anzahl an Aktuatorstellgrößen im Referenzflugbetrieb des Luftfahrzeugs unterhalb eines dafür vorgesehenen Grenzwertes ist;
- Fig. 7: eine Darstellung von Datenbereichskacheln gemäß Fig. 6, die oberhalb des dafür vorgesehenen Grenzwertes liegen;
- Fig. 8: eine Darstellung einer Referenzflugsignatur des Luftfahrzeugs, die aus den Aktuatorstellgrößen im Referenzflugbetrieb des Luftfahrzeugs gebildet ist;
- Fig. 9: eine beispielhafte Darstellung von in einem Flugbetrieb des Luftfahrzeugs ermittelten Aktuatorstellgrößen, die in einem Polarkoordinatensystem aufgetragen sind;
- Fig. 10: eine Bewertung von Datenbereichskacheln des Polarkoordinatensystems gemäß Fig. 9 in Abhängigkeit der jeweiligen Anzahl von im Flugbetrieb des Luftfahrzeugs ermittelten Aktuatorstellgrößen;
- Fig. 11: eine Hervorhebung der Datenbereichskacheln gemäß Fig. 10, deren Anzahl an Aktuatorstellgrößen im Flugbetrieb des Luftfahrzeugs unterhalb eines dafür vorgesehenen Grenzwertes ist;
- Fig. 12: eine Darstellung von Datenbereichskacheln gemäß Fig. 11, die oberhalb des dafür vorgesehenen Grenzwertes liegen und eine flugspezifische Signatur bilden; und
- Fig. 13: einen Vergleich der jeweiligen Datenbereichskacheln der flugspezifischen Signatur und der Referenzflugsignatur.

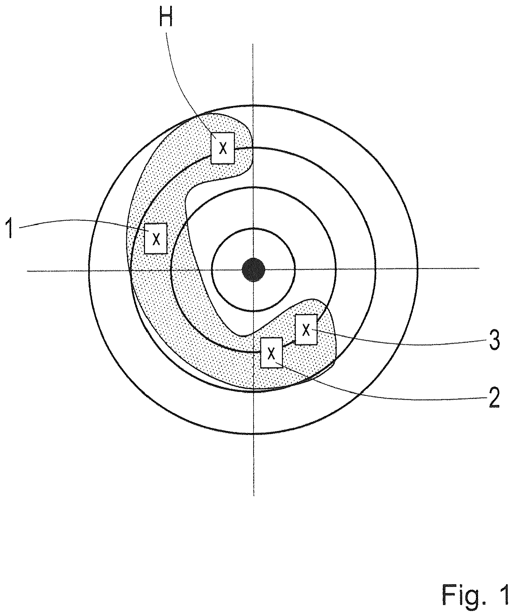

Figur 1 zeigt ein in einem Polarkoordinatensystems dargestelltes charakteristisches Vibrationsprofil der 1/rev Hauptrotorvibrationen eines nicht beschädigten, also intakten als konventionellen Hubschrauber mit Haupt- und Heckrotor ausgeführten Drehflüglers, der kein System zur aktiven Vibrationsreduktion aufweist. Die gezeigten Punkte 1, 2, 3 und H repräsentieren Referenzmessungen der Vibrationen in verschiedenen Flugzuständen. So repräsentiert der Punkt H beispielsweise eine Referenzmessung der Vibrationen bei einem Schwebeflug, der Punkt 1 eine Referenzmessung der Vibrationen bei einem Vorwärtsflug mit einer ersten Geschwindigkeit von beispielsweise 90 Knoten, der Punkt 2 eine Referenzmessung der Vibrationen bei einem weiteren Vorwärtsflug mit einer zweiten Geschwindigkeit von beispielsweise 110 Knoten und der Punkt 3 eine Referenzmessung der Vibrationen bei einem weiteren Vorwärtsflug mit einer dritten Geschwindigkeit von beispielsweise 130 Knoten. Der schraffierte Bereich repräsentiert einen Korridor, welcher einen "normalen" Betriebsbereich des unbeschädigten Luftfahrzeugs in Schwebe- und Vorwärtsflug, aber nicht in "extremen" Flugmanövern darstellt.

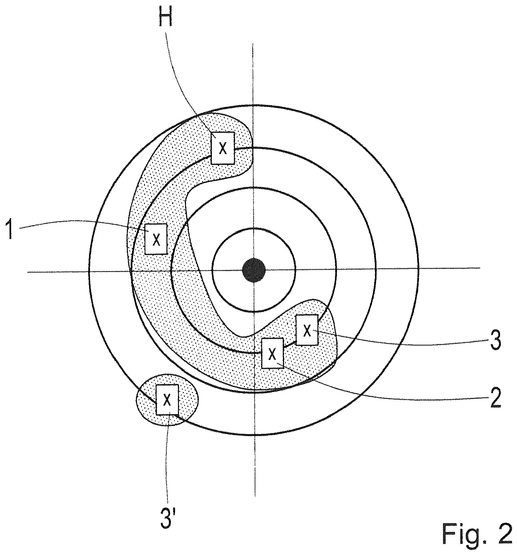

Figur 2 zeigt im Vergleich zu dem charakteristischen Vibrationsprofil aus Figur 1 exemplarisch die resultierenden Vibrationen 3' eines beschädigten Hauptrotors bei Level Flight mit 130 Knoten für ein Luftfahrzeug ohne Systeme zur aktiven Vibrationsreduktion. Diesen Fehler können aus dem Stand der Technik bekannte Health and Usage Monitoring Systeme (HUMS) erkennen.

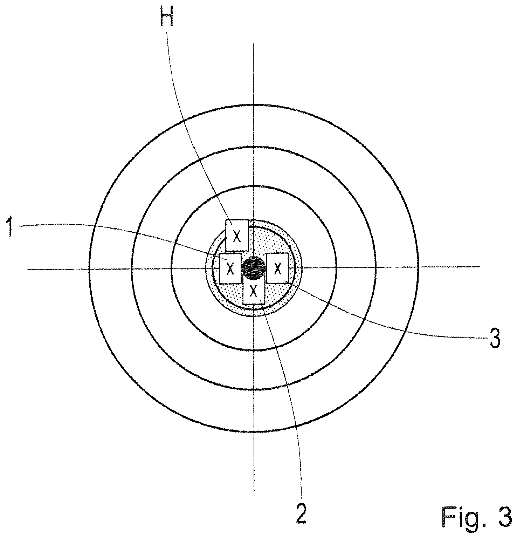

Figur 3 zeigt ein Vibrationsprofil eines Hubschraubers für die Flugzustände gemäß Figur 1, wobei der Hubschrauber nun aktive Systeme zur Vibrationsreduktion, insbesondere Aktuatoren zur aktiven Vibrationsreduktion aufweist. Beim Einsatz von Aktuatoren zur aktiven Vibrationsreduktion, also aktive Systeme zur Vibrationsreduktion sind die Amplituden der rotorharmonischen Vibrationen regelmäßig in allen Flugzuständen niedrig. Des Weiteren verfügen die Vibrationen des unbeschädigten Luftfahrzeugs nicht mehr über eine charakteristische Phase, wie es bei Hubschraubern ohne aktive Systeme zur Vibrationsreduktion der Fall ist. Aktive Systeme zur Vibrationsreduktion sind ebenfalls in der Lage die Vibrationen bei beschädigtem Haupt- und/oder Heckrotor zu reduzieren, so dass sich hinsichtlich der Vibrationen kein Unterschied zwischen unbeschädigtem und beschädigtem Hubschrauber feststellen lässt. Die gezeigten Punkte 1, 2, 3 und H repräsentieren Referenzmessungen der Vibrationen in verschiedenen Flugzuständen.

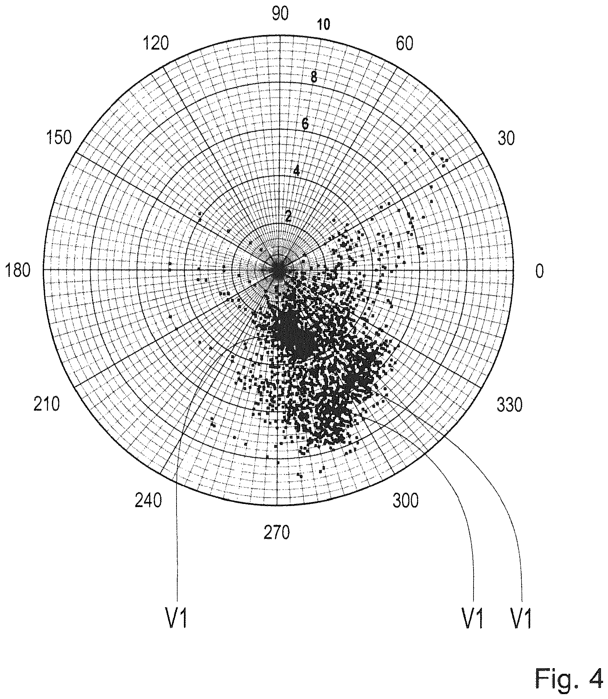

In den nachfolgenden Figuren 4 bis 13 wird ein bevorzugtes Ausführungsbeispiel des erfindungsgemäßen Verfahrens zur Erkennung von Schäden eines Rotors eines Luftfahrzeugs mit Aktuatoren zur aktiven Vibrationsreduktion erläutert. Das erfindungsgemäße Verfahren wird anhand eines grafischen Auswerteverfahrens beschrieben. Dies dient primär zur Veranschaulichung. In einer praktischen Anwendung des erfindungsgemäßen Verfahrens erfolgt die Auswertung rechnergestützt. In den nachfolgenden Figuren 4 bis 13 sind Polarkoordinatensysteme dargestellt, wobei die Beschriftung und der Maßstab der Polarkoordinatenachsen identisch sind und somit nur der Inhalt, also die darin eingetragenen Datenpunkte zumindest teilweise variiert. Der Abstand vom Pol bzw. Ursprung (vorliegend das Zentrum) wird durch Radialkoordinaten (0 bis 10) beschrieben, wobei der Winkel zu der Polarachse durch eine Winkelkoordinate (0 bis 360) beschrieben wird.

Zunächst wird ein Referenzflugbetrieb des Luftfahrzeugs durchgeführt, wobei Aktuatorstellgrößen im Referenzflugbetrieb des Luftfahrzeugs ermittelt werden. Die ermittelten Aktuatorstellgrößen dienen als Stellgrößen der Aktuatoren und werden im Referenzflugbetrieb des Luftfahrzeugs zur aktiven Vibrationsreduktion mittels der Aktuatoren verwendet.

Gemäß Figur 4 werden die im Referenzflugbetrieb des Luftfahrzeugs ermittelten Aktuatorstellgrößen bzw. erste Datenpunkte V1 in Koordinaten eines Koordinatensystems, vorliegend in Polarkoordinaten eines Polarkoordinatensystems dargestellt. Die im Referenzflugbetrieb des Luftfahrzeugs ermittelten Aktuatorstellgrößen bilden erste Datenpunkte V1, wobei die ersten Datenpunkte V1 die resultierende Richtung und Amplitude der vibrationsreduzierenden Wirkung der Aktuatoren darstellen.

Das Koordinatensystem weist eine Vielzahl von Datenbereichskacheln bzw. erste Datenbereiche D1, insbesondere ein Netz von Datenbereichskacheln auf, wobei innerhalb einer jeweiligen Datenbereichskachel eine Vielzahl von Datenpunkten darstellbar ist. Vorliegend gibt es Datenbereichskacheln, die keine Aktuatorstellgrößen aufweisen. Ferner gibt es auch Datenbereichskacheln, die eine oder mehrere Aktuatorstellgrößen aufweisen. Jeder Datenpunkt V1 in dem Polarkoordinatensystem repräsentiert somit eine jeweilige Aktuatorstellgröße, die im Referenzflugbetrieb des Luftfahrzeug erfasst wird. Im weiteren Verlauf des Verfahrens wird die Anzahl der Aktuatorstellgrößen im Referenzflugbetrieb des Luftfahrzeugs, die in jeder Datenbereichskachel angeordnet sind erfasst. Mithin erfolgt eine Zählung der Datenpunkte V1 in jeder Datenbereichskachel D1.

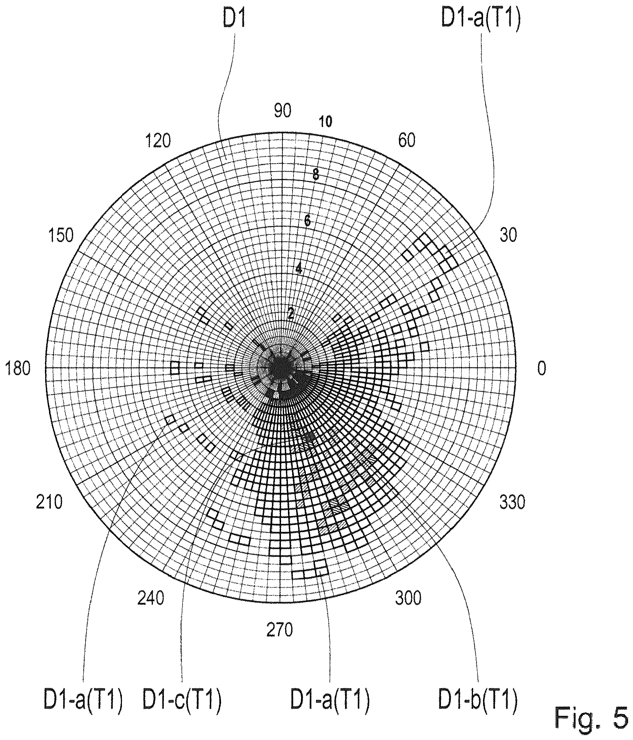

Figur 5 zeigt ein weiteres Polarkoordinatensystem, das auf das Polarkoordinatensystem aus Figur 4 basiert. Vorliegend sind die Datenbereichskacheln bzw. die ersten Datenbereiche D1 in Abhängigkeit der im Referenzflugbetrieb des Luftfahrzeugs erfassten Anzahl der Aktuatorstellgrößen hervorgehoben. Datenbereichskacheln, die zumindest eine Aktuatorstellgröße bzw. einen ersten Datenpunkt V1 enthalten, weisen einen dicker gezeichneten Rahmen auf, wie beispielhaft durch Kachel D1-a(T1) gezeigt. Der Klammerausdruck (T1) deutet auf die Zuordnung der Datenbereichskacheln zur Referenzflugsignatur hin. Gestrichelte Datenbereichskacheln, wie durch Kachel D1-b(T1) gezeigt, weisen mehr Datenpunkte auf als die Datenbereichskacheln D1-a(T1). Voll ausgefüllte Kacheln, wie durch D1-c(T1) gezeigt, weisen mehr Datenpunkte auf als die Datenbereichskacheln D1-b(T1). Aus Gründen der Übersichtlichkeit wurden nicht alle Kacheln D1, D1-a(T1), D1-b(T1), D1-c(T1) mit Bezugszeichen versehen.

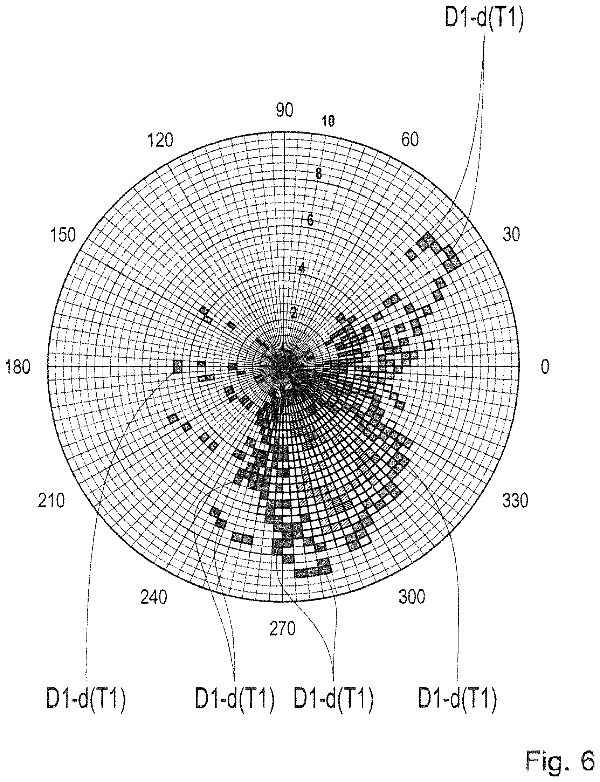

Nach Figur 6 werden basierend auf dem Polarkoordinatensystem gemäß Figur 5 Datenbereichskacheln D1-d(T1) durch eine Füllung markiert, deren Anzahl an Aktuatorstellgrößen im Referenzflugbetrieb des Luftfahrzeugs unterhalb eines dafür vorgesehenen Grenzwertes ist. Um Messfehler und statistisch unbedeutende Abweichungen aus der Referenzflugsignatur auszuschließen, bleiben diejenigen Datenbereichskacheln D1-d(T1) unberücksichtigt, deren Anzahl von Datenpunkten unterhalb des dafür vorgesehenen Grenzwertes liegen und somit vorliegend ausgefüllt dargestellt sind.

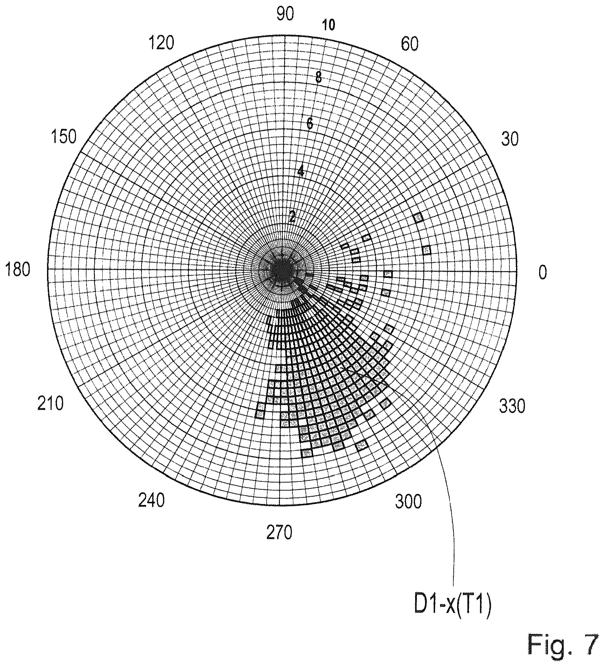

In Figur 7 sind die gemäß Figur 6 ausgefüllten Datenbereichskacheln, deren Anzahl an Aktuatorstellgrößen im Referenzflugbetrieb des Luftfahrzeugs bzw. ersten Datenpunkten V1 unterhalb des dafür vorgesehenen Grenzwertes ist, nicht mehr dargestellt, weil sie eliminiert wurden. Mithin sind nur noch die Datenbereichskacheln D1-x(T1) dargestellt, deren Anzahl an Aktuatorstellgrößen im Referenzflugbetrieb des Luftfahrzeugs bzw. ersten Datenpunkten V1 oberhalb des dafür vorgesehenen Grenzwertes liegen.

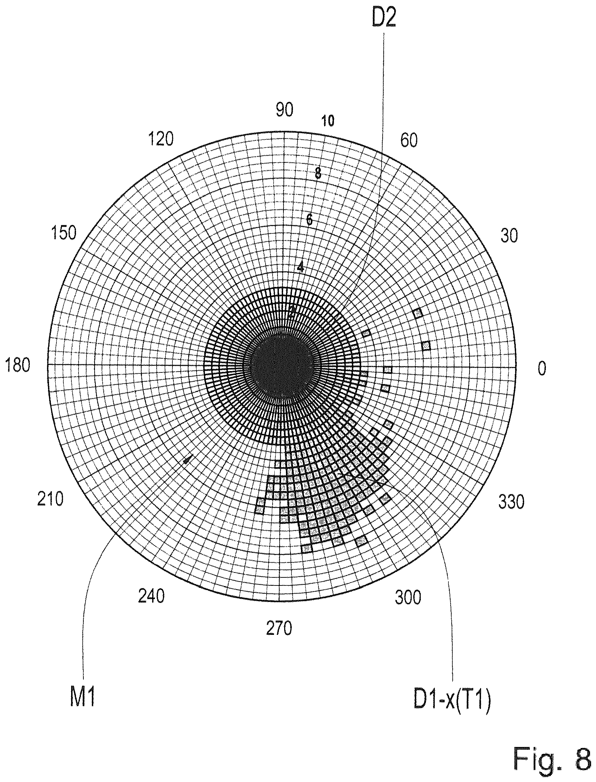

Nach Figur 8 werden zusätzliche Datenbereichskacheln bzw. zweite Datenbereiche D2 für alle Winkelkoordinaten von einem Pol des Polarkoordinatensystems bis zu einer Grenzwertradialkoordinate ergänzt, wodurch eine Referenzflugsignatur erstellt wird. Mithin stellt das Polarkoordinatensystem gemäß Figur 8 die Referenzflugsignatur M1 des Luftfahrzeugs dar, die aus den ersten Datenpunkten V1 bzw. Aktuatorstellgrößen im Referenzflugbetrieb des Luftfahrzeugs und den zweiten Datenbereichen D2 gebildet wird.

Die nun nachfolgenden Verfahrensschritte erfolgen während eines dem Referenzflugbetrieb zeitlich nachgelagerten Flugbetriebs des Luftfahrzeugs.

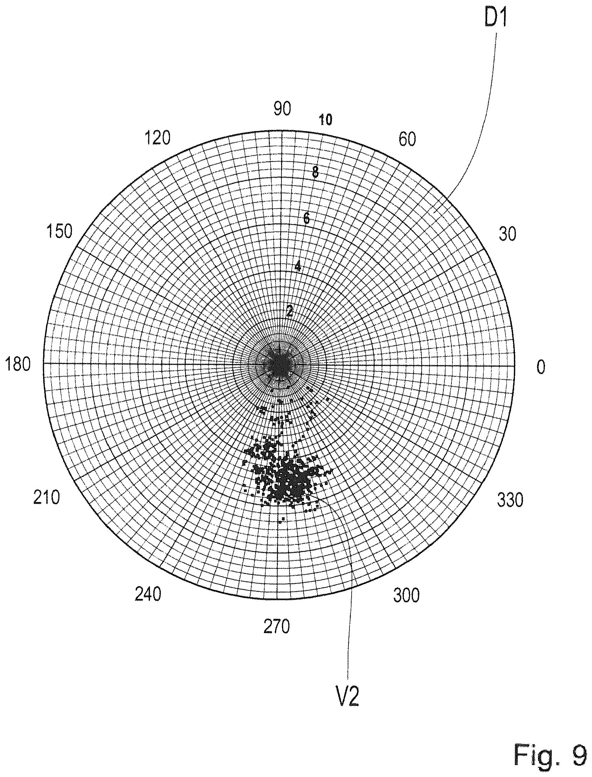

Gemäß Figur 9 werden die für eine flugspezifische Signatur ermittelten Aktuatorstellgrößen bzw. zweite Datenpunkte V2 in Polarkoordinaten eines Polarkoordinatensystems dargestellt. Die ermittelten Aktuatorstellgrößen dienen als Stellgrößen der Aktuatoren und werden im Flugbetrieb des Luftfahrzeugs zur aktiven Vibrationsreduktion mittels der Aktuatoren verwendet. Das Polarkoordinatensystems gemäß Figur 9 ist identisch zu dem Polarkoordinatensystem gemäß Figur 4. Mit anderen Worten sind die Beschriftung und Bemessung der Koordinatenachsen, ebenso wie das Netz von Datenbereichskacheln D1 identisch bzw. gleich. Die Identität der Polarkoordinatensysteme und somit auch die Identität der Datenbereichskacheln D1 sind für einen späteren Vergleich notwendig.

Vorliegend gibt es Datenbereichskacheln, die keine Aktuatorstellgrößen aufweisen. Ferner gibt es auch Datenbereichskacheln, die eine oder mehrere Aktuatorstellgrö-ßen aufweisen. Jeder zweite Datenpunkt V2 in dem Polarkoordinatensystem repräsentiert somit eine jeweilige Aktuatorstellgröße, die im Flugbetrieb des Luftfahrzeugs erfasst wird. Im weiteren Verlauf des Verfahrens wird die Anzahl von Aktuatorstellgrößen im Flugbetrieb des Luftfahrzeugs, die in jeder Datenbereichskachel gemäß dem Polarkoordinatensystem nach Figur 9 angeordnet sind, erfasst. Mithin erfolgt eine Zählung der Datenpunkte in jeder Datenbereichskachel. Das Netz von Datenbereichskacheln der flugspezifischen Signatur ist identisch zu den Datenbereichskacheln der Referenzflugsignatur ausgebildet.

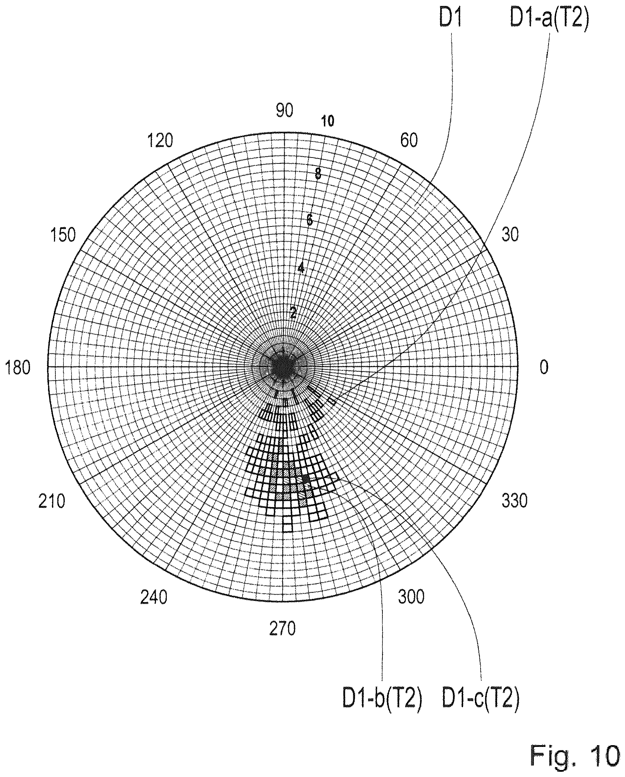

Figur 10 zeigt ein weiteres Polarkoordinatensystem, das auf das Polarkoordinatensystem gemäß Figur 9 basiert. Vorliegend sind die Datenbereichskacheln D1 in Abhängigkeit der im Flugbetrieb des Luftfahrzeugs erfassten Anzahl der Aktuatorstellgrößen hervorgehoben. Datenbereichskacheln D1, die zumindest eine Aktuatorstellgröße bzw. einen zweiten Datenpunkt V2 enthalten, weisen einen dicker gezeichneten Rahmen auf, wie beispielhaft durch Kachel D1-a(T2) gezeigt. Der Klammerausdruck (T2) deutet auf die Zuordnung der Datenbereichskacheln zur flugspezifischen Signatur hin. Gestrichelte Datenbereichskacheln, wie durch Kachel D1-b(T2) gezeigt, weisen mehr Datenpunkte auf als die Datenbereichskacheln D1-a(T2). Voll ausgefüllte Kacheln, wie durch D1-c(T2) gezeigt, weisen mehr Datenpunkte auf als die Datenbereichskacheln D1-b(T2). Aus Gründen der Übersichtlichkeit wurden nicht alle Kacheln D1, D1-a(T2), D1-b(T2), D1-c(T2) mit Bezugszeichen versehen.

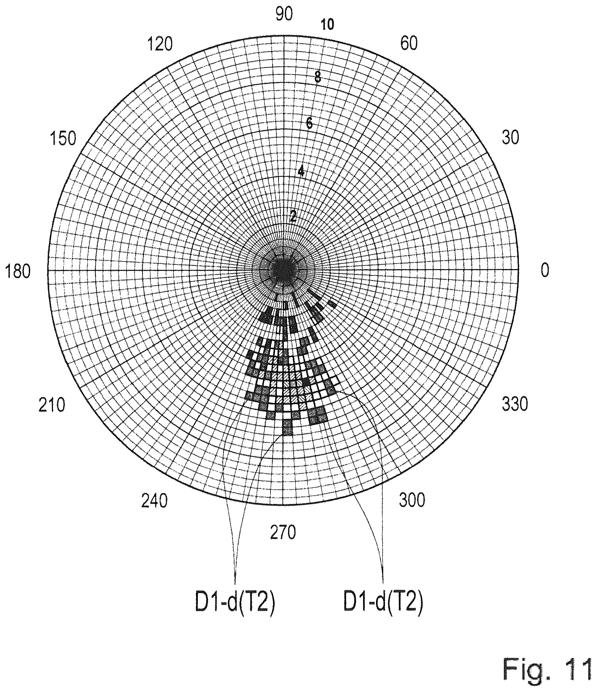

Nach Figur 11 werden basierend auf dem Polarkoordinatensystem gemäß Figur 10 Datenbereichskacheln D1-d(T2) durch eine Füllung markiert, deren Anzahl an Aktuatorstellgrößen im Flugbetrieb des Luftfahrzeugs unterhalb eines dafür vorgesehenen Grenzwertes ist. Um Messfehler und statistisch unbedeutende Abweichungen aus der flugspezifische Signatur auszuschließen, bleiben diejenigen Datenbereichskacheln unberücksichtigt, deren Anzahl von Datenpunkten unterhalb des dafür vorgesehenen Grenzwertes liegen und somit vorliegend ausgefüllt dargestellt sind.

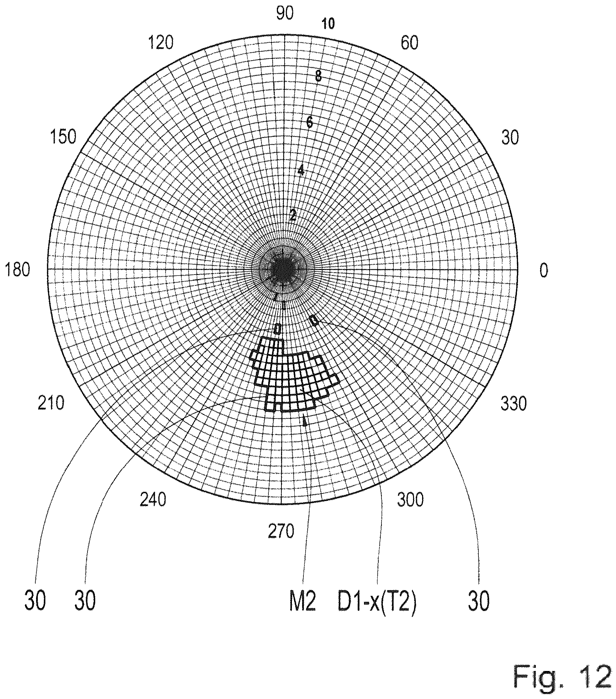

In Figur 12 sind die gemäß Figur 11 ausgefüllten Datenbereichskacheln, deren Anzahl an zweiten Datenpunkten V2 bzw. Aktuatorstellgrößen im Flugbetrieb des Luftfahrzeugs unterhalb des dafür vorgesehenen Grenzwertes ist, nicht mehr dargestellt, weil sie eliminiert wurden. Dadurch wird die flugspezifische Signatur M2 erstellt. Mithin stellt das Polarkoordinatensystem gemäß Figur 12 die flugspezifische Signatur M2 des Luftfahrzeugs dar, die aus den Aktuatorstellgrößen im Flugbetrieb des Luftfahrzeugs gebildet wird.

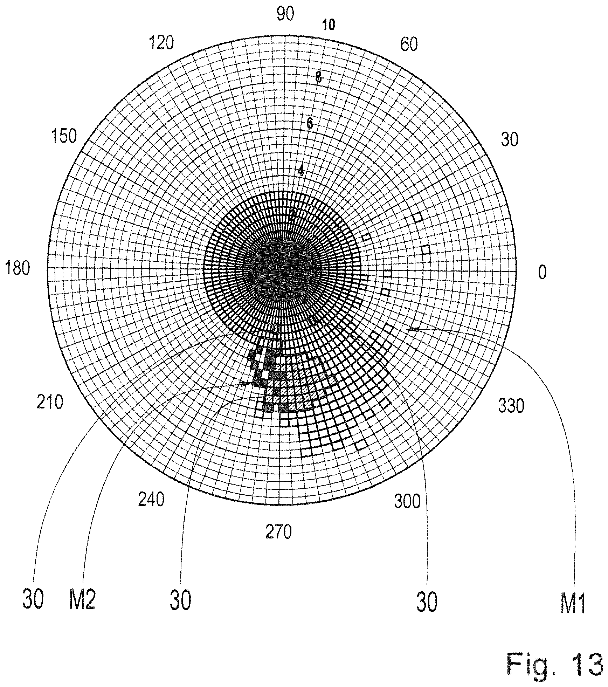

In Figur 13 wird ein Vergleich der jeweiligen Datenbereichskacheln von der flugspezifischen Signatur und der Referenzflugsignatur vorgenommen. Vorliegend wird zum Vergleich der flugspezifischen Signatur M2 mit der Referenzsignatur M1 die flugspezifische Signatur M2 gemäß Figur 12 um die Referenzflugsignatur M1 gemäß Figur 8 ergänzt. Der Vergleich der jeweiligen Datenbereichskacheln von der flugspezifischen Signatur M2 und der Referenzflugsignatur M1 dient zur Schadenserkennung. Jede Datenbereichskachel D1-x(T2) der flugspezifischen Signatur, die keine Datenbereichskacheln der Referenzflugsignatur M1 darstellt deutet auf eine Veränderung des Luftfahrzeugs oder des Flugspektrums hin, wobei eine geringe Anzahl von Abweichungen der Datenbereichskacheln als akzeptabel angesehen werden kann. Die flugspezifische Signatur M2 ist durch die Umrisse 30 hervorgehoben.

Überschreitet die Anzahl der abweichenden Datenbereichskacheln zwischen der flugspezifischen Signatur M2 und der Referenzflugsignatur M1 einen hierfür vorgesehenen Grenzwert, kann beispielsweise mit Hilfe eines Anzeigeelements eine Warnmeldung ausgegeben werden, welche signalisiert, dass potentiell ein Schaden am Haupt- und/oder Heckrotor vorliegt und eine Überprüfung angeraten ist.

Ferner kann aus einer Differenz zwischen der flugspezifischen Signatur M2 und der Referenzflugsignatur M1 eine Differenzsignatur erzeugt werden. Anhand des Vergleichs der Differenzsignatur mit bekannten Schadenssignaturen, welche in Versuchen und/oder Simulationen ermittelt wurden und auf einer Datenbank abgelegt sind, kann zudem eine Identifikation des eingetretenen Schadens erfolgen.

### Bezugszeichen

- 1: Referenzmessungen der Vibrationen bei erstem Vorwärtsflug
- 2: Referenzmessungen der Vibrationen bei zweitem Vorwärtsflug
- 3: Referenzmessungen der Vibrationen bei drittem Vorwärtsflug
- H: Referenzmessungen der Vibrationen bei Schwebeflug
- 3': Referenzmessungen der Vibrationen bei beschädigtem Hauptrotor
- 30: Umriss flugspezifische Signatur
- D1: erster Datenbereich bzw. Datenbereichskachel
- D1-...(T1): erste Datenbereiche mit unterschiedlicher Anzahl erster Datenpunkte
- D1-...(T2): erste Datenbereiche mit unterschiedlicher Anzahl zweiter Datenpunkte
- D2: zweiter Datenbereich bzw. Datenbereichskachel
- M1: Referenzmuster bzw. Referenzflugsignatur
- M2: flugspezifische Signatur
- V1: erste Datenpunkte
- V2: zweite Datenpunkte

## Patentansprüche

1. Verfahren zur Erkennung von Schäden eines Rotors eines Luftfahrzeugs, wobei das Luftfahrzeug Aktuatoren zur aktiven Vibrationsreduktion aufweist, das Verfahren umfassend die Schritte:
- Ermitteln von Aktuatorstellgrößen in einem Referenzflugbetrieb des Luftfahrzeugs, wobei die ermittelten Aktuatorstellgrößen im Referenzflugbetrieb des Luftfahrzeugs zur aktiven Vibrationsreduktion mittels der Aktuatoren verwendet werden;
- Darstellen der ermittelten Aktuatorstellgrößen von jeweiligen Datenbereichskacheln (D1, D1-...(T1)) im Referenzflugbetrieb des Luftfahrzeugs in ersten Koordinaten eines Koordinatensystems, wobei das Koordinatensystem eine Vielzahl von geschlossenen und nicht überlappenden Datenbereichskacheln (D1) aufweist, wobei ferner die Koordinaten jeweiligen Datenbereichskacheln (D1, D1-...(T1)) zugeordnet werden, wobei innerhalb einer Datenbereichskachel eine Vielzahl von Koordinaten darstellbar ist;
- Erfassen einer Anzahl der Aktuatorstellgrößen im Referenzflugbetrieb des Luftfahrzeugs, die in jeder Datenbereichskachel (D1, D1-...(T1)) angeordnet sind;
- Eliminieren der Datenbereichskacheln, deren Anzahl an Aktuatorstellgrößen im Referenzflugbetrieb des Luftfahrzeugs unterhalb eines dafür vorgesehenen Grenzwertes ist, wodurch eine Referenzflugsignatur (M1) erstellt wird;
- Ermitteln von Aktuatorstellgrößen für eine flugspezifische Signatur (M2), wobei die ermittelten Aktuatorstellgrößen im Flugbetrieb des Luftfahrzeugs zur Vibrationsreduktion mittels der Aktuatoren verwendet werden;
- Darstellen der ermittelten Aktuatorstellgrößen im Flugbetrieb des Luftfahrzeugs in zweiten Koordinaten des Koordinatensystems, wobei das Koordinatensystem eine Vielzahl von Datenbereichskacheln (D1, D1-...(T2)) aufweist, wobei ferner die Koordinaten jeweiligen Datenbereichskacheln (D1, D1-...(T2)) zugeordnet werden, wobei innerhalb einer Datenbereichskachel (D1, D1-...(T2)) eine Vielzahl von Koordinaten darstellbar ist, und wobei die Datenbereichskacheln (D1, D1-...(T2)) der flugspezifischen Signatur (M2) identisch zu den Datenbereichskacheln (D1, D1-...(T1)) der Referenzflugsignatur (M1) ausgebildet sind;
- Erfassen der Anzahl der Aktuatorstellgrößen im Flugbetrieb des Luftfahrzeugs, die in jeder Datenbereichskachel (D1, D1-...(T2)) angeordnet sind;
- Eliminieren der Datenbereichskacheln (D1, D1-...(T2)), deren Anzahl an Aktuatorstellgrößen im Flugbetrieb des Luftfahrzeugs unterhalb eines dafür vorgesehenen Grenzwertes ist, wodurch die flugspezifische Signatur (M2) erstellt wird;
- Vergleich der jeweiligen Datenbereichskacheln (D1, D1-...(T1), D1-...(T2)) von der flugspezifischen Signatur (M1) und der Referenzflugsignatur (M2), wobei bei einer Überschreitung eines Grenzwertes für die Anzahl an abweichenden Datenbereichskacheln (D1, D1-...(T1), D1-...(T2)) zwischen der flugspezifischen Signatur (M2) und der Referenzflugsignatur (M1) ein Warnsignal für eine Schadenserkennung ausgegeben wird.

2. Verfahren nach Anspruch 1, **dadurch gekennzeichnet, dass** die jeweiligen Aktuatorstellgrößen in Polarkoordinaten eines Polarkoordinatensystems dargestellt werden.

3. Verfahren nach Anspruch 2, **dadurch gekennzeichnet, dass** vor dem Darstellen der Referenzflugsignatur (M1) zusätzliche Datenbereichskacheln (D2) für alle Winkelkoordinaten von einem Pol des Polarkoordinatensystems bis zu einer Grenzwertradialkoordinate ergänzt werden.

4. Verfahren nach einem der vorherigen Ansprüche, **dadurch gekennzeichnet, dass** zumindest der Vergleich der flugspezifischen Signatur (M2) mit der Referenzflugsignatur (M1) während des Flugbetriebes des Luftfahrzeugs durchgeführt wird.

5. Verfahren nach einem der vorherigen Ansprüche, **dadurch gekennzeichnet, dass** zumindest der Vergleich der flugspezifischen Signatur mit der Referenzflugsignatur (M1) nach dem Flugbetrieb des Luftfahrzeugs durchgeführt wird.

6. Verfahren nach einem der vorherigen Ansprüche, **dadurch gekennzeichnet, dass** zunächst eine Mindestanzahl von Aktuatorstellgrößen im Flugbetrieb des Luftfahrzeugs erreicht wird, bevor der Vergleich der flugspezifischen Signatur (M2) mit der Referenzflugsignatur (M1) erfolgt.

7. Verfahren nach einem der vorherigen Ansprüche, **dadurch gekennzeichnet, dass** eine Differenz zwischen der flugspezifischen Signatur (M2) und der Referenzflugsignatur (M1) gebildet wird, um eine Differenzsignatur zu erhalten, wobei die Differenzsignatur mit einer Vielzahl von auf einer Datenbank abgelegten Schadenssignaturen verglichen wird, um einen spezifischen Schadensfall zu identifizieren.

8. Verfahren nach einem der vorherigen Ansprüche, **dadurch gekennzeichnet, dass** eine verstellbare Trimmklappe als Aktuator zur aktiven Vibrationsreduktion verwendet wird.

9. Verfahren nach einem der vorherigen Ansprüche, **dadurch gekennzeichnet, dass** eine verstellbare Steuerstange als Aktuator zur aktiven Vibrationsreduktion verwendet wird.

10. Verfahren nach einem der vorherigen Ansprüche, **dadurch gekennzeichnet, dass** die Referenzflugsignatur (M1) aus einer Mindestanzahl von Referenzflugbetrieben des Luftfahrzeugs erstellt wird.

11. Verfahren nach Anspruch 7, **dadurch gekennzeichnet, dass** die auf der Datenbank abgelegten Schadenssignaturen in realen Versuchen und/ oder computergestützten Simulationen ermittelt werden.

12. Verfahren nach einem der vorherigen Ansprüche, **dadurch gekennzeichnet, dass** bei Überschreitung eines Grenzwertes eines Gradienten für die Anzahl an abweichenden Datenbereichskacheln (D1, D1-...(T1), D1-...(T2)) zwischen der flugspezifischen Signatur (M2) und der Referenzflugsignatur (M1) ein Warnsignal ausgegeben wird.

13. Verfahren nach einem der vorherigen Ansprüche, **dadurch gekennzeichnet, dass** eine zuvor ermittelte Referenzsignatur (M1) durch Daten weiterer Referenzflugbetriebe ersetzt oder erweitert werden kann.

14. C omputerprogrammprodukt, enthaltend maschinenlesbare Anweisungen, die, wenn sie auf einem C omputer ausgeführt werden, den C omputer zu einer B e-rechnungslogik aufwerten und dazu veranlassen, ein Verfahren nach einem der Ansprüche 1 bis 13 auszuführen.

## Claims

1. A method for detecting damage to a rotor of an aircraft, wherein the aircraft comprises actuators for active vibration reduction, the method comprising the following steps:
determining actuator manipulated variables in a reference flight operation of the aircraft, wherein the determined actuator manipulated variables are used in the reference flight operation of the aircraft for active vibration reduction by means of the actuators;
plotting the determined actuator manipulated variables of respective data area tiles (D1, D1-...(T1)) in the reference flight operation of the aircraft on first coordinates of a coordinate system, wherein the coordinate system comprises a plurality of closed and non-overlapping data area tiles (D1), wherein, furthermore, the coordinates are assigned to respective data area tiles (D1, D1-...(T1)), wherein a plurality of coordinates is representable within one data area tile;
detecting a number of the actuator manipulated variables in the reference flight operation of the aircraft, which are arranged in each data area tile (D1, D1-...(T1)) ;
eliminating the data area tiles comprising a number of actuator manipulated variables in the reference flight operation of the aircraft which is below a threshold provided for this purpose, whereupon a reference flight signature (M1) is generated;
determining actuator manipulated variables for a flight-specific signature (M2), wherein the determined actuator manipulated variables are used in the flight operation of the aircraft to reduce vibration by means of the actuators;
plotting the determined actuator manipulated variables in the flight operation of the aircraft on second coordinates of the coordinate system, wherein the coordinate system comprises a plurality of data area tiles (D1, D1-...(T2)), wherein, furthermore, the coordinates are assigned to respective data area tiles (D1, D1-...(T2)), wherein a plurality of coordinates is representable within one data area tile (D1, D1-...(T2)), and wherein the data area tiles (D1, D1-...(T2)) of the flight-specific signature (M2) and the data area tiles (D1, D1-...(T1)) of the reference flight signature (M1) are embodied identically;
detecting the number of the actuator manipulated variables in the flight operation of the aircraft, which are arranged in each data area tile (D1, D1-...(T2));
eliminating the data area tiles (D1, D1-...(T2)) comprising a number of actuator manipulated variables in the flight operation of the aircraft, which is below a threshold provided for this purpose, whereby the flight-specific signature (M2) is generated;
comparing the respective data area tiles (D1, D1-...(T1) D1-...(T2)) of the flight-specific signature (M1) and the reference flight signature (M2), wherein a warning signal for a detection of damage is issued if a threshold for the number of divergent data area tiles (D1, D1-...(T1) D1-...(T2)) between the flight-specific signature (M2) and the reference flight signature (M1) is exceeded.

2. The method of claim 1, **characterized in that** the respective actuator manipulated variables are plotted on polar coordinates of a polar coordinate system.

3. The method of claim 2, **characterized in that**, prior to representing the reference flight signature (M1), additional data area tiles (D2) are added for all angular coordinates from a pole of the polar coordinate system to a threshold radial coordinate.

4. The method of one of the preceding claims, **characterized in that** at least the comparison of the flight-specific signature (M2) with the reference flight signature (M1) is carried out during the flight operation of the aircraft.

5. The method of one of the preceding claims, **characterized in that** at least the comparison of the flight-specific signature with the reference signature (M1) is carried out after the flight operation of the aircraft.

6. The method of one of the preceding claims, **characterized in that** a minimum number of actuator manipulated variables is obtained in the flight operation of the aircraft before the flight-specific signature (M2) is compared with the reference flight signature (M2).

7. The method of one of the preceding claims, **characterized in that** a difference between the flight-specific signature (M2) and the reference flight signature (M1) is determined in order to obtain a difference signature, wherein the difference signature is compared with a plurality of damage signatures stored in a database in order to identify a specific case of damage.

8. The method of one of the preceding claims, **characterized in that** an adjustable trim flap is used as actuator for the active vibration reduction.

9. The method of one of the preceding claims, **characterized in that** an adjustable control rod is used as actuator for the active vibration reduction.

10. The method of one of the preceding claims, **characterized in that** the reference flight signature (M1) is generated from a minimum number of reference flight operations of the aircraft.

11. The method of claim 7, **characterized in that** the damage signatures stored in the database are determined in real-life tests and/or in computer-aided simulations.

12. The method of one of the preceding claims, **characterized in that** a warning signal is issued if a threshold of a gradient for the number of divergent data area tiles (D1, D1-...(T1) D1-...(T2)) between the flight-specific signature (M2) and the reference flight signature (M1) is exceeded.

13. The method of one of the preceding claims, **characterized in that** a previously determined reference signature (M1) can be replaced or expanded by data of further reference flight operations.

14. A computer program product comprising machine-readable instructions which, when executed on a computer, upgrade the computer to computational logic and cause the computer to execute a method according to one of claims 1 to 13.

## Revendications

1. Procédé de détection de dommages au rotor d'un aéronef, dans lequel l'aéronef comprend des actionneurs permettant une réduction active des vibrations, le procédé comprenant les étapes consistant à :
déterminer des valeurs de réglage d'actionneur pendant une activité aérienne de référence de l'aéronef, les valeurs de réglage d'actionneur déterminées étant utilisées pendant l'activité aérienne de référence de l'aéronef pour une réduction active des vibrations au moyen des actionneurs ;
représenter les valeurs de réglage d'actionneur déterminées de tuiles de zone de données (D1, D1-...(T1)) respectives pendant l'activité aérienne de référence de l'aéronef sous forme de premières coordonnées d'un système de coordonnées, le système de coordonnées présentant une pluralité de tuiles de zone de données (D1) fermées et ne se chevauchant pas, les coordonnées étant associées à des tuiles de zone de données (D1, D1-... (T1)) respectives, et une pluralité de coordonnées étant représentables à l'intérieur d'une tuile de zone de données ;
détecter un nombre de valeurs de réglage d'actionneur pendant l'activité aérienne de référence de l'aéronef étant agencées dans chaque tuile de zone de données (D1, D1-... (T1)) ;
éliminer les tuiles de zone de données dont le nombre de valeurs de réglage d'actionneur pendant l'activité aérienne de référence de l'aéronef est inférieur à une valeur limite prévue à cet effet, ce qui crée une signature de vol de référence (M1) ;
déterminer des valeurs de réglage d'actionneur pour une signature spécifique de vol (M2), les valeurs de réglage d'actionneur déterminées étant utilisées pendant l'activité aérienne de référence de l'aéronef pour réduire les vibrations au moyen des actionneurs ;
représenter les valeurs de réglage d'actionneur déterminées pendant l'activité aérienne de référence de l'aéronef sous forme de secondes coordonnées du système de coordonnées, le système de coordonnées présentant une pluralité de tuiles de zone de données (D1, D1-...(T2)), les coordonnées étant associées à des tuiles de zone de données (D1, D1-...(T2)) respectives, une pluralité de coordonnées étant représentables à l'intérieur d'une tuile de zone de données (D1, D1-...(T2)), et les tuiles de zone de données (D1, D1-...(T2)) de la signature spécifique de vol (M2) et les tuiles de zone de données (D1, D1-... (T1)) de la signature de vol de référence (M1) étant formées de manière identique;
détecter le nombre de valeurs de réglage d'actionneur agencées dans chaque tuile de zone de données (D1, D1-...(T2)) pendant l'activité aérienne de référence de l'aéronef ;
éliminer les tuiles de zone de données (D1, D1-... (T2) dont le nombre de valeurs de réglage d'actionneur pendant l'activité aérienne de référence de l'aéronef est inférieur à une valeur limite prévue à cet effet, ce qui crée la signature spécifique de vol (M2) ;
comparer les tuiles de zone de données (D1, D1-... (T1), D1-... (T2)) respectives de la signature spécifique de vol (M1) et de la signature de vol de référence (M2), un signal d'avertissement pour une détection de dommages étant émis en cas de dépassement d'une valeur limite d'un nombre de tuiles de zone de données (D1, D1-... (T1), D1-...(T2)) sujettes à un écart entre la signature spécifique de vol (M2) et la signature de vol de référence (M1).

2. Procédé selon la revendication 1, **caractérisé en ce que** les valeurs de réglage d'actionneur respectives sont représentées sous forme de coordonnées polaires d'un système de coordonnées polaires.

3. Procédé selon la revendication 2, **caractérisé en ce que** des tuiles de zone de données (D2) supplémentaires sont ajoutées pour toutes les coordonnées angulaires, d'un pôle du système de coordonnées polaires jusqu'à une coordonnée radiale de valeur limite, avant la représentation de la signature de vol de référence (M1).

4. Procédé selon l'une quelconque des revendications précédentes, **caractérisé en ce qu'**au moins la comparaison de la signature spécifique de vol (M2) avec la signature de vol de référence (M1) est mise en œuvre pendant l'activité aérienne de l'aéronef.

5. Procédé selon l'une quelconque des revendications précédentes, **caractérisé en ce qu'**au moins la comparaison de la signature spécifique de vol avec la signature de vol de référence (M1) est mise en œuvre après l'activité aérienne de l'aéronef.

6. Procédé selon l'une quelconque des revendications précédentes, **caractérisé en ce qu'**un nombre minimal de valeurs de réglage d'actionneur est d'abord atteint pendant l'activité aérienne de l'aéronef, avant d'effectuer la comparaison de la signature spécifique de vol (M2) avec la signature de vol de référence (M1).

7. Procédé selon l'une quelconque des revendications précédentes, **caractérisé en ce qu'**une différence est formée entre la signature spécifique de vol (M2) et la signature de vol de référence (M1) afin d'obtenir une signature différentielle, la signature différentielle étant comparée à une pluralité de signatures de dommages stockées dans une base de données afin d'identifier un cas de dommages spécifique.

8. Procédé selon l'une quelconque des revendications précédentes, **caractérisé en ce qu'**un volet compensateur réglable est utilisé comme actionneur pour une réduction active de vibrations.

9. Procédé selon l'une quelconque des revendications précédentes, **caractérisé en ce qu'**une tige de commande réglable est utilisée comme actionneur pour une réduction active de vibrations.

10. Procédé selon l'une quelconque des revendications précédentes, **caractérisé en ce que** la signature de vol de référence (M1) est établie à partir d'un nombre minimal d'activités aériennes de référence de l'aéronef.

11. Procédé selon la revendication 7, **caractérisé en ce que** les signatures de dommages stockées dans la base de données sont déterminées lors d'essais réels et/ou de simulations assistées par ordinateur.

12. Procédé selon l'une quelconque des revendications précédentes, **caractérisé en ce qu'**un signal d'avertissement est émis en cas de dépassement d'une valeur limite d'un gradient pour le nombre de tuiles de zone de données (D1, D1-...(T1), D1-...(T2)) sujettes à un écart entre la signature spécifique de vol (M2) et la signature de vol de référence (M1).

13. Procédé selon l'une quelconque des revendications précédentes, **caractérisé en ce qu'**une signature de référence (M1) préalablement déterminée peut être remplacée ou étendue par des données d'autres activités aériennes de référence de l'aéronef.

14. Produit-programme informatique contenant des instructions lisibles par machine qui, lorsqu'elles sont exécutées sur un ordinateur, mettent l'ordinateur à niveau vers une logique de calcul et l'incitent de mettre en œuvre un procédé selon l'une quelconque des revendications 1 à 13.
